Europäisches Patentamt

European Patent Office

Office européen des brevets

(19)

(11) Publication number: **0 012 588**
**B1**

(12) **EUROPEAN PATENT SPECIFICATION**

(45) Date of publication of patent specification: **23.02.83**

(21) Application number: **79302841.6**

(22) Date of filing: **10.12.79**

(51) Int. Cl.³: **A 21 C 15/02, A 21 B 5/02**

(54) **Method and apparatus for preparing moulded wafers.**

(30) Priority: **08.12.78 NL 7811970**

(43) Date of publication of application:
**25.06.80 Bulletin 80/13**

(45) Publication of the grant of the patent:
**23.02.83 Bulletin 83/8**

(84) Designated Contracting States:
**AT BE CH DE FR GB IT LU NL SE**

(56) References cited:
**AT - A - 275 446**
**DE - A - 2 508 533**
**GB - A - 1 245 476**
**US - A - 1 851 578**
**US - A - 2 069 027**
**US - A - 3 541 587**

(73) Proprietor: **UNILEVER PLC**
**Unilever House Blackfriars P O Box 68**
**London EC4P 4BQ (GB)**
(84) **GB**
(73) Proprietor: **UNILEVER NV**
**Burgemeester s'Jacobplein 1 P.O. Box 760**
**NL-3000 DK Rotterdam (NL)**
(84) **BE CH DE FR IT LU NL SE AT**

(72) Inventor: **Stave, Gerhard**
**Julius Roentgenstraat 13**
**The Hague (NL)**

(74) Representative: **Stancliffe, Terence Christopher et al,**
**Unilever PLC, Patent Division PO Box 31 Salisbury Square House Salisbury Square**
**London EC4P 4AN (GB)**

Courier Press, Leamington Spa, England.

# Method and apparatus for preparing hollow moulded wafers

The present invention relates to a method and apparatus for preparing hollow moulded wafers from baking dough, e.g. dough with high sugar content.

While it is possible to bake hollow wafers from dough having a low sugar content, e.g. of 5% (by weight based on the weight of the dry farinaceous component), without problems arising, when higher sugar content is used special steps should be taken to allow steam and gases to escape and to provide wafers of a satisfactory quality and solidity. It has therefore been proposed, for example, to open the baking mould a few times for a moment during baking, or first to bake a light wafer in the baking mould which is initially only partly filled, and to compress this in a final baking step, after addition of the rest of the dough, in a second cycle of the baking mould.

Hollow wafers from dough with high sugar content (e.g. 25%—60%, e.g. about 35%—45%) tend to stick to the baking moulds and, when they are extracted from the baking moulds and during subsequent cooling, can still assume another shape. However, hollow wafers differing from one another in form and dimension are unsatisfactory for filling with, e.g. ice cream, in high-speed filling machines.

It has already been recommended in US—A—2 069 027 to restore cones, the circular cross-section of which assumes an elliptical shape when they are extracted from the baking mould, to their initial shape in a cooling mould.

According to the invention to be described below, hollow wafers can be prepared from a dough of high sugar content, e.g. about 25 to 60% (calculated on the weight of dry farinaceous components, e.g. the flour or starch used or of the mixture of these components), which wafers can be given a satisfactory reproducible uniform shape and, in particular satisfactorily uniform dimensions and shape about their edges at their open ends.

According to the invention there is provided a process for preparing a hollow moulded wafer from a dough of high sugar content, in which process a hollow wafer is baked in a baking mould, and is then introduced into a cooling and reshaping mould while still hot and stiffens there in a shape given to it by the cooling and reshaping mould, characterised in that firstly the moulded wafer is baked from a dough with a sugar content in the range 25%—60% based on the weight of the farinaceous dough components, the hollow wafer having a light, porous structure, and being then made rigid while cooling by compressing, its structure and surface by reduction of its wall thickness in a cooling and compressing mould to form a hollow moulded wafer of reduced wall thickness.

Also provided by the invention is apparatus for carrying out a process for preparing hollow moulded wafers, consisting of baking apparatus comprising a baking mould suitably shaped for baking hollow wafers, and a final reshaping device for cooling and reshaping such wafers, characterised in that the final cooling and reshaping device is a cooling and compressing mould, shaped to yield a hollow wafer as product and having a mould space which is of smaller thickness than that of the baking mould, thereby in operation to reduce the wall thickness of the hollow moulded wafer as originally baked. The dimensions of the hollow mould space of the final reshaping and compressing mould correspond with the accurately determined dimensions to be given to the finished hollow moulded wafer product.

In examples of processes according to the invention, hollow wafers are baked first with very light structure, then introduced into a cooling mould while still hot and pliable and therein, under compression of their structure and surface, in particular by reducing their wall thickness, are solidified or reshaped, and stiffen with dimensions determined by the cooling mould.

The hollow space formed by the parts of the baking mould is relatively large with respect to the amount of dough used. The expansion of the dough and the escape of the steam as a result of heating during baking encounter therefore only little resistance. This results in a very light wafer which does not retain its shape sufficiently and may not have the required shape in some places, as e.g. on the upper edge. The final shaping and compressing of the structure occur in the cooling mould, the hollow space of which corresponds with the finished wafer. For the compression the wall thickness can, for example, be reduced by about 15% to 25%, and for example by up to 30%—50%, and locally still more. The final shaping and compression occur immediately after the wafer has been extracted from the baking mould and it comes into the cooling mould while still hot and soft. The cooling mould remains closed until the wafer in the planned shape has cooled and is rigid so that, after it has been extracted therefrom, further deformations do not occur. It would seem that particularly in the case of a sugar content of the dough of more than 45%, the shape of the wafer obtained in the cooling mould is retained owing to the sugar "frame" forming in the baked dough on cooling. The hollow wafers extracted from the cooling mould have a denser structure both within and on their surface and also have sufficient mechanical solidity.

In the case of the lightly baked hollow wafer the edge of the opening can be irregular. If compression takes place, at the beginning of the cooling in the cooling mould, especially the edge of the opening of the wafer is therefore solidified and finally shaped with accurate dimensions. As a result of this, the wafers get edges which can easily be taken hold of mechanically during the following mechanical operations, such as filling and packing.

In a preferred embodiment of the method according to the invention a hollow wafer of a light structure and a particular shape is baked in the baking mould, e.g. in the form of a body with smooth walls and a pattern is pressed into the surface only at the beginning of the cooling. The usual relief of the baking moulds, which brings about, for example, a wafer pattern on the outer face of the wafer, makes it difficult to extract the baked wafers and necessitates the wafers being adapted to a corresponding relief of the cooling moulds. Wafers with smooth walls can be extracted far easier from the parts of the baking mould, which is especially an advantage in the case of a dough of high sugar content which tends to stick; moreover, this removes the necessity of adapting them to the relief.

The parts of the baking mould are difficult to interchange, as the baking temperature should be strictly observed, so that the usual baking devices are only suitable for baking a certain type of wafer. However, if wafers having a smooth surface are baked and finally shaped in the cooling mould, it is very simple to make various surface patterns by changing the cooling moulds, the local surface temperature then being of less influence. In this way, also when a single baking mould is used, differently shaped hollow wafers can be obtained.

Before or at the beginning of the compression in the cooling mould, a fatty mixture impregnating the wafer is applied to the surface of the still light, hot wafer, which protects the wafer against the penetration of moisture. Because of the porous, light structure of the still hot wafer the liquid fatty mixture penetrates into the wall of the wafer and stiffens while the wafer cools. Especially in the case of wafers for moist fillings, such as, for example, ice cream, it is advantageous to treat the inside in this way. The fatty mixture can be sprayed from the core of the cooling mould to the inside of the hollow wafer or pressed from the core into the wafer. The core can therefore be provided with a channel system for the fatty mixture containing a large number of outlet openings or spray nozzles. The surface of the core can, however, also consist of a sintered metal, the porosity of which enables the penetration of the fatty mixture into the hot wafer.

The invention will now be further illustrated by the following detailed description and attached drawings, in which:

Fig. 1 shows an example of a lightly baked moulded wafer in the shape of a hollow cone.

Fig. 2 shows an example of a closed cooling mould containing a finished wafer in the shape of a hollow cone.

Fig. 3 shows a second example of a lightly baked wafer.

Fig. 4 shows an example of a hollow wafer compressed and reshaped from the wafer shown in Fig. 3.

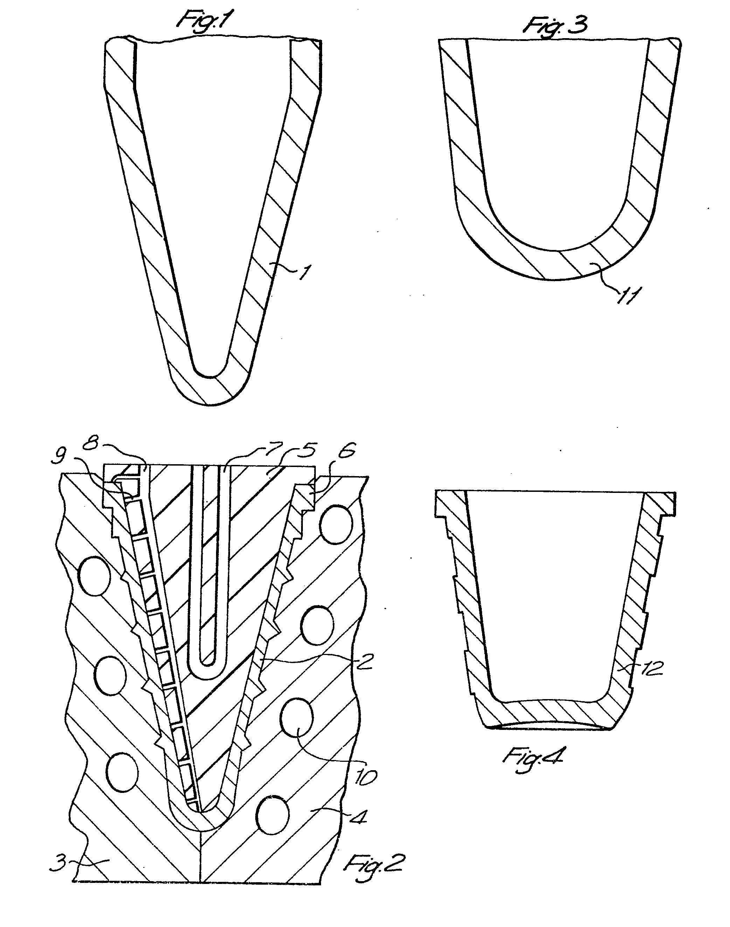

Referring to the examples of the process and apparatus of the invention as illustrated by Figures 1 and 2, a hollower wafer (1) (Figure 1) has been baked in approximately the shape of a cone in a baking mould of conventional form and which is not provided with relief. The wafer therefore has smooth surfaces, has a very light, porous structure and would not retain its form sufficiently on cooling. The upper edge is somewhat irregular. While still hot, the thus-baked wafer is pressed into the cooling mould shown in Fig. 2, and becomes the cone 2 in its final shape (hollow moulded wafer). During a compressing and cooling step in the mould, wafer 1 is pushed between the cooling mould halves 3 and 4 and the cooling core 5 slid into the cooling mould. Because of the reduction of the wall thickness (and, if desired, also the height and the diameter, in which case the mould is shaped accordingly), compression of the wall and surface structure occurs. The compression can take place both radially and axially and in the case of an appropriate shape of the hollow wafer 1 it is also possible to provide a different local compression. Thus, for example, not only can the opening edge 6 be formed with very accurate dimensions but, as a result of the locally greater compression, also with greater mechanical solidity. In contrast with the baking moulds for wafer 1, which are not illustrated, the cooling moulds 3 and 4 have a relief, as a result of which a pattern is pressed on to the outer side of cone 2.

The cooling core 5 shown in Fig. 2 comprises a channel 7 for a conventional cooling liquid which can keep the cooling core at any desired suitable temperature. A second channel system 8 serves for the introduction of an edible fatty mixture which impregnates the inside of the cone. The fat is pressed through a large number of openings 9 into the inside of cone 2 and stiffens here as cone 2 cools. The surface temperature of the cooling cone 5, the stiffening temperature of the fatty mixture and the temperature of the hot wafer placed in cooling mould halves 3 and 4 can be adjusted with respect to each other. The cooling mould halves 3 and 4 are provided with channels 10 for coolant.

In the operation of an arrangement as shown for example in Fig. 2, moulded wafer cones are transferred to the cooling mould arrangement shown from baking moulds in which they have been baked to obtain a light, porous structure. These baking moulds can be of conventional form and in themselves constitute no part of this invention. The wall thickness of the wafers as initially baked in the baking moulds can be, for example, in the range about 2—3 mm, e.g. about 2.5 mm to 2.6 mm. The wafers can be baked from a dough or batter containing conventional dough ingredients (e.g. flour, sugar, water, and further additives) in which the uncooked dry components form, for example, about 50%—60% w/v, e.g. about 55% w/v. The weight of the baked cone can be, for example, about 35%—50% of the weight of the dough dosed into the mould. The rising properties of the dough can be adjusted (e.g. with bicarbonate) so that, when the dough dosed into the mould corresponds to the free volume between the mould parts, there is a loss by overflow during baking of, for example, about 5%—15% of the quantity of dough dosed into the mould. In this way, for example, the light, porous structure can be produced. Suitable baking temperatures are, for example, in the range about 180°—210°C, (e.g. for dough with sugar contents about 35—45%). The light porous cone so produced can be transferred to the cooling mould by conventional mechanical transport arrangements that in themselves form no part of this invention. We have found that the light, porous cones may remain sufficiently hot and soft for compression in the cooling moulds for a period of time after extraction from the baking mould or otherwise after cessation of baking for a period of time of for example 0.1 to 0.4 minutes: the higher the sugar content, the longer the cones remain hot and soft. Suitable temperatures for the cooling moulds are, for example, in the range 195°—160°C (most preferably the lower the temperature, the higher the sugar content of the cones). In the cooling moulds, the wall thicknesses of the cones can, for example, be compressed to about 50%—85% (e.g. 50%—70%) of their original thickness, for the desired final consistency. Fig. 3 shows a second example of a lightly baked hollow wafer 11, which can be reshaped into a wafer beaker 12 as shown in Fig. 4, in a cooling mould not shown, but corresponding in functional arrangement to that shown in Figure 2. It can be seen that variously-shaped wafer beakers can be formed from cooling—remoulding of the simple rotation—the symmetrical shape of the hollow wafer 11. For example, the final product can be given an oval or polygonal cross-section and any of various heights, by using correspondingly-shaped cooling moulds.

## Claims

1. A process for preparing a hollow moulded wafer (2, 12) from a dough of high sugar content, in which process a hollow wafer (1, 11) is baked in a baking mould, and is then introduced into a cooling and reshaping mould (3, 4, 5) while still hot and stiffens there in a shape given to it by the cooling and reshaping mould (3, 4, 5), characterised in that firstly the hollow moulded wafer (1, 11) is baked from a dough with a sugar content in the range 25%—60% based on the weight of the farinaceous dough components, the hollow wafer (1, 11) having a light, porous structure, and being then made rigid while cooling by compressing its structure and surface by reduction of its wall thickness in a cooling and compressing mould (3, 4, 5) to form a hollow moulded wafer (2, 12) of reduced wall thickness.

2. A process according to claim 1, characterised in that during the cooling and compressing step the edge (6) of the opening of the hollow wafer (2, 12) is formed according to accurately determined dimensions.

3. A process according to claim 1 or 2, characterised in that the shape of the hollow wafer (12) is changed at the beginning of cooling.

4. A process according to any of claims 1 to 3, characterised in that the hollow wafer is first baked in the shape of a body with smooth walls and a pattern is pressed into it by the cooling mould (3, 4, 5).

5. A process according to any of claims 1 to 4, characterised in that whilst the hollow wafer is in the cooling mould (3, 4, 5) a fatty mixture impregnating the wafer is applied under pressure.

6. A process according to any of claims 1 to 5, characterised in that the starting material is a dough with a sugar content of 35 to 45% (calculated on the weight of the flour and/or starch used).

7. A process according to any preceding claim, characterised in that the wall thickness of the hollow wafer (1, 11) as initially baked is in the range 2—3 mm, for example, 2.5 mm, and is reduced to 50%—85% of its original thickness during compression in the cooling moulds (3, 4, 5).

8. A process according to any preceding claim, characterised in that the temperature of the cooling mould (3, 4, 5) is in the range 160°—195°C.

9. Apparatus for carrying out a process according to any of claims 1 to 8, consisting of baking apparatus comprising a baking mould suitably shaped for baking hollow wafers, and a final reshaping device for cooling and reshaping such wafers, characterised in that the final cooling and reshaping device is a cooling and compressing mould (3, 4, 5), shaped to yield a hollow wafer (2, 12) as product and having a mould space which is of smaller thickness than that of the baking mould, thereby in operation to reduce the wall thickness of the hollow moulded wafer as originally baked (1, 11).

10. Apparatus according to claim 9, characterised in that the cooling core (5) of the final shaping device is provided with a channel system (8, 9) or a porous surface for the supply of a fatty mixture on to the surface of the hollow wafer (2).

11. Apparatus according to claim 9 and 10, characterised in that the hollow mould space of the baking mould corresponds to a wall thickness of the initial wafer (1, 11) in the range 2—3 mm and the hollow mould space of the cooling mould (3, 4, 5) corresponds to a wall thickness in the finished hollow moulded wafer (2, 12) in the range 50%—85% of the wall thickness of initial wafer (1, 11).

## Revendications

1. Procédé pour la préparation d'une gaufre moulée creuse (2, 12) à partir d'une pâte à forte teneur en sucre, procédé dans lequel une gaufre creuse (1, 11) est cuite dans un moule de cuisson, et est ensuite introduite dans un moule de refroidissement et de remise en forme (3, 4, 5) alors qu'elle est encore chaude, et durcit alors sous la forme que lui donne le moule de refroidissement et remise en forme (3, 4, 5), caractérisé en ce que la gaufre moulée creuse (1, 11) est d'abord cuite à partir d'une pâte dont la teneur en sucre se situent dans la gamme 25—60% sur la base du poids des composants farineux de la pâte, la gaufre creuse (1, 11) ayant une structure légère, poreuse, et étant alors rendue rigide pendant qu'elle refroidit par compression de sa structure et sa surface par réduction de son épaisseur de paroi dans un moule de refroidissement et compression (3, 4, 5), pour former une gaufre moulée creuse (2, 12) dépaisseur de paroi réduite.

2. Procédé selon la revendication 1, caractérisé en ce que, au cours de l'étape de refroidissement et remise en forme, le bord (6) de l'ouverture de la gaufre creuse (2, 12) est formé à des dimensions déterminées avec précision.

3. Procédé selon la revendication 1 ou 2, caractérisé en ce que la forme de la gaufre creuse (12) est modifiée au début du refroidissement.

4. Procédé selon l'une quelconque des revendications 1 à 3, caractérisé en ce que la gaufre creuse est d'abord cuite sous la forme d'un corps à parois lisses, et en ce qu'un dessin est imprimé dans ce corps par le moule de refroidissssement (3, 4, 5).

5. Procédé selon l'une quelconque des revendications 1 à 4, caractérisé en ce que, pendant que la gaufre creuse se trouve dans le moyle de refroidissement (3, 4, 5), un mélange gras d'imprégnation de la gaufre est appliqué sous pression.

6. Procédé selon l'une quelconque des revendications 1 à 5, caractérisé en ce que le matériau de départ est une pâte ayant une teneur en sucre de 35 à 45% (calculée sur le poids de la farine et/ou fécule utilisée).

7. Procédé selon l'une quelconques des revendications précédentes, caractérisé en ce que l'épaisseur de paroi de la gaufre creuse (1, 11), telle qu'initialement cuite, se situe dans la gamme 2—3 mm, par exemple 2,5 mm, et est réduite à 50—85% de cette épaisseur d'origine au cours de la compression dans les moules de refroidissement (3, 4, 5).

8. Procédé selon l'une quelconque des revendications précédentes, caractérisé en ce que la température du moule de refroidissement (3, 4, 5) se situe dans la gamme 160—195°C.

9. Appareil pour la mise en oeuvre d'un procédé selon l'une quelconque des revendications 1 à 8, consistant en un appareil de cuisson comportant un moule de cuisson de forme appropriée à la cuisson de gaufres creuses, et en un dispositif de remise en forme définitive pour refroidir et remettre en forme de telles gaufres, caractérisé en ce que le dispositif de refroidissement et remise en forme définitive est un moule de refroidissement et compression (3, 4, 5) façonné pour l'obtention d'une gaufre creuse (2, 12) comme produit, et ayant un espace de moulage qui est d'épaisseur plus faible que l'épaisseur du moule de cuisson, de sorte que, lors de son utilisation, il réduit l'épaisseur de paroi de la gaufre creuse moulée telle que cuite à l'origine (1, 11).

10. Appareillage selon la revendication 9, caractérisé en ce que le noyau de refroidissement (5) du dispositif de mise en forme définitive est pourvu d'un système de canaux (8, 9) ou d'une surface poreuse, pour transférer un mélange gras à la surface de la gaufre creuse (2).

11. Appareillage selon les revendications 9 et 10, caractérisé en ce que l'espace de moulage creux de moule de cuisson correspond à une épaisseur de paroi de la gaufre initiale (1, 11) qui se situe dans la gamme 2—3 mm, et en ce que l'espace de moulage creux du moule de refroidissement (3, 4, 5) correspond à une épaisseur de paroi de la gaufre moulée creuse terminée (2, 12) qui se situe dans une gamme de 50—85% de l'épaisseur de paroi de la gaufre initiale (1, 11).

## Patentansprüche

1. Verfahren zum Herstellen einer geformten Hohlwaffel (2, 12) aus einen Teig mit hohem Zuckergehalt, bei welchem Verfahren eine Hohlwaffel (1, 11) in einer Backform gebacken und dann, während sie noch heiß ist, in eine Kühl- und Neugestaltungsform (3, 4, 5), eingebracht wird und dort in einer Gestalt härtet, die ihr durch die Kühl- und Neugestaltungsform (3, 4, 5), verliehen wird, dadurch gekennzeichnet, daß zuerst die geformte Hohlwaffel (1, 11) aus einem Teig mit einem Zuckergehalt im Bereich von 25 bis 60%, bezogen auf die Masse der Mehlteigkomponenten, gebacken wird, wobei die Hohlwaffel (1, 11) eine leichte, poröse Struktur aufweist, und dann unter Kühlen durch Komprimieren ihrer Struktur und Oberfläche durch Verminderung ihrer Wandstärke in einer Kühl- und Komprimierform (3, 4, 5) hart gemacht wird, wobei eine geformte Hohlwaffel (2, 12) mit verminderter Wandstärke gebildet wird.

2. Verfahren gemäß Anspruch 1, dadurch gekennzeichnet, daß während des Kühl- und Komprimierschrittes die Kante (6) der Öffnung der Hohlwaffel (2, 12) entsprechend genau bestimmten Dimensionen geformt wird.

3. Verfahren gemäß Anspruch 1 oder 2, dadurch gekennzeichnet, daß dei Gestalt der Hohlwaffel (12) zu Beginn des Kühlens geändert wird.

4. Verfahren gemäß einen der Ansprüche 1 bis 3, dadurch gekennzeichnet, daß die Hohlwaffel zuerst in Form eines Körpers mit glatten Wänden gebacken und durch die Kühlform (3, 4, 5) ein Muster hineingedrückt wird.

5. Verfahren gemäß einem der Ansprüche 1 bis 4, dadurch gekennzeichnet, daß, während sich die Hohlwaffel in der Kühlform (3, 4, 5) befindet, eine die Waffel imprägnierende Fettmischung unter Druck aufgebracht wird.

6. Verfahren gemäß einem der Ansprüche 1 bis 5, dadurch gekennzeichnet, daß das Ausgangsmaterial ein Teig mit einem Zuckergehalt von 35 bis 45% (bezogen auf die Masse des verwendetern Mehls und/oder der verwendeten Stärke) ist.

7. Verfahren gemäß einem der vorhergehenden Ansprüche, dadurch gekennzeichnet, daß die Wandstärke der Hohlwaffel (1, 11), wie sie zuerst gebacken wird, im Bereich von 2 bis 3 mm, beispielsweise 2,5 mm, liegt und während des Komprimierens in den Kühlformen (3, 4, 5) auf 50 bis 85% der ursprünglichen Stärke vermindert wird.

8. Verfahren gemäß einem der vorhergehenden Ansprüche, dadurch gekennzeichnet, daß die Temperatur der Kühlform (3, 4, 5) im Bereich von 160 bis 195°C liegt.

9. Vorrichtung zur Durchführung eines Verfahrens gemäß einem der Ansprüche 1 bis 8, bestehend aus einer Backvorrichtung, die eine Backform umfaßt, welche zum Backen von Hohlwaffeln geeignet ausgebildet ist, und einer Endneugestaltungseinrichtung zum Kühlen und Neugestalten derartiger Waffeln, dadurch gekennzeichnet, daß die Endkühl- und Neugestaltungseinrichtung eine Kühl- und Komprimierform (3, 4, 5) ist, die so ausgebildet ist, daß sie eine Hohlwaffel (2, 12) als Produkt ergibt, und einen Formraum aufweist, der eine geringere Stärke besitzt als jene der Backform, um dadurch beim Arbeiten die Wandstärke der geformten Hohlwaffel, wie sie ursprünglich gebacken wurde (1, 11), zu vermindern.

10. Vorrichtung gemäß Anspruch 9, dadurch gekennzeichnet, daß der Kühlkern (5) der Endgestaltungseinrichtung mit einem Kanalsystem (8, 9) oder einer porösen Oberfläche zum Zuführen einer Fettmischung auf die Oberfläche der Hohlwaffel (2) versehen ist.

11. Vorrichtung gemäß Anspruch 9 und 10, dadurch gekennzeichnet, daß der Hohlformraum der Backform einer Wandstärke der ursprünglichen Waffel (1, 11) im Bereich von 2 bis 3 mm entspricht und der Hohlformraum der Kühlform (3, 4, 5) einer Wandstärke der fertigen geformten Hohlwaffel (2, 12) im Bereich von 50 bis 85% der Wandstärke der ursprünglichen Waffel (1, 11) entspricht.

0012 588

Fig.1

Fig. 3

Fig.2

Fig.4